# EUROPÄISCHE PATENTSCHRIFT

(11) **EP 1 055 644 B1**
(45) Veröffentlichungstag und Bekanntmachung des Hinweises auf die Patenterteilung: **11.02.2004**
(21) Anmeldenummer: 00108298.1
(22) Anmeldetag: 14.04.2000
(51) Int. Cl.: C03B 5/182, C03B 7/02, C03B 5/26

(54) **Verfahren und Vorrichtung zum Homogenisieren eines fliessfähigen Mediums,insbesondere einer Glasmasse**
Method and apparatus for homogenising a viscous medium, in particular, molten glass
Procédé et appareil d'homogénéisation d'une matière visceuse en particulier du verre fondu

(30) Priorität: 07.05.1999 DE 19921288
(43) Veröffentlichungstag der Anmeldung: 29.11.2000
(73) Patentinhaber: Schott Spezialglas GmbH, 55122 Mainz (DE)
(72) Erfinder: Dick, Erhard, 95666 Mitterteich (DE); Fischer, Erich, 95666 Mitterteich (DE); Fuchs, Roland, 95666 Mitterteich (DE)
(74) Vertreter: Dr. Weitzel & Partner

(56) Entgegenhaltungen:
- EP-A- 0 599 403
- FR-A- 1 004 374
- PATENT ABSTRACTS OF JAPAN vol. 9, no. 145 (C-287) [1868], 20. Juni 1985 (1985-06-20) & JP 60 027614 A (SASAKI GLASS K.K.), 12. Februar 1985 (1985-02-12)

## Beschreibung

Die Erfindung betrifft ein Verfahren sowie eine Vorrichtung zum Homogenisieren eines fließfähigen Mediums. Dabei geht es insbesondere um Glasschmelzen.

Bei der Glasherstellung ist es notwendig, die Glasmasse in besonderer Weise aufzubereiten, bevor sie dem Bearbeitungsprozeß zugeführt wird. Strömt Glasmasse in einem System offener Rinnen, so kann es zu einer Verdampfung flüchtiger Bestandteile aus der Glasoberfläche kommen. Dies führt zu einer Anreicherung der freien Glasoberfläche mit Siliciumdioxyd. Dies führt wiederum zu Schlieren. Um die Schlieren zu beseitigen und um damit die Glasmasse zu homogenisieren, werden Rührer eingesetzt.

Je stärker die Schlierenbildung ist, desto höher muß die Drehzahl des Rührers sein. Je höher die Drehzahl des Rührers ist, desto größer ist der Verschleiß sowie die Gefahr des Auftretens von Kavifation.

Es sind zahlreiche Vorrichtungen bekannt, bei denen Glasschmelze in einem Kanal von einer ersten zu einer zweiten Bearbeitungsstation gefördert werden, beispielsweise von einer Schmelzwanne zu einer Läuterwanne, oder von einer Läuterwanne zu einem Homogenisiergefäß. Nur beispielsweise wird auf die folgenden Dokumente verwiesen:
(1) Glassindustry, Dezember 1991, Seiten 22 bis 24, 27, 28
(2) DE 195 15 431 A1
(3) EP 0 864 543 A1
(4) US 5 862 169 A
(5) DE-OS 24 26 297

Bei allen diesen Druckschriften finden Umlenkungen der Strömung der Glasmasse oder Beschleunigungen des Glasmassestromes zufolge Querschnittsverringerungen statt, und zwar sowohl für sich alleine als auch in Kombination. Dennoch befriedigen diese Verfahren beziehungsweise Vorrichtungen nicht und die Mängel liegen hierbei in Folgendem: Entweder findet keine ausreichende Durchmischung und Schlierenbeseitigung statt, oder es kommt zu Kavitation, oder es wird Luft in die Glasmasse eingerührt.

Der Erfindung liegt die Aufgabe zugrunde, Maßnahmen zu treffen, mit denen fließfähige Medien, insbesondere Glasmassen, homogenisiert werden können, und mit denen sich die Rührerarbeit verringern oder gänzlich vermeiden läßt.

Diese Aufgabe wird durch die Merkmale der unabhängigen Ansprüche gelöst.

Die Erfinder haben somit eine Möglichkeit erkannt, die sich mit relativ geringem Aufwand realisieren läßt. Dadurch können Rühreinrichtungen entweder völlig entfallen, oder nur bei geringen Drehzahlen verwendet werden. Zusätzlich zu den genannten Vorteilen wird somit auch die zum Rühren notwendige Energie verringert.

Das Umlenken der Strömung als eine der erfindungsgemäßen Maßnahmen sollte wenigstens um einen Winkel von 60 Grad vorgenommen werden, am besten im Bereich von 90 Grad. Die Umlenkung sollte hingegen nicht mehr als 120 Grad betragen. Ist sie zu stark, so kann es zu Stagnationen des Glasflusses kommen. Dabei herrscht eine Abhängigkeit zwischen dem Maß der Umlenkung oder Richtungsänderung einerseits und dem Kanaldurchmesser andererseits. Je kleiner der Kanaldurchmesser ist, desto geringer ist die Gefahr des Auftretens einer Stagnation.

Werden mehrere Richtungsänderungen vorgenommen, so können diese auch räumlich erfolgen, das heißt nicht nur in einer Ebene, sondern in mehreren Ebenen.

Was das andere Merkmal anbetrifft, nämlich die Beschleunigung der Strömung, so wird dies in der Praxis durch eine Querschnittsverjüngung vorgenommen. Die Verjüngung sollte wenigstens 30 Prozent betragen. Hat eine Rinne beispielsweise einen durchströmten Querschnitt von 100, so müßte sich dieser auf wenigstens 70 verjüngen. Dabei sollte die genannte Verjüngung stetig stattfinden, somit nicht sprunghaft.

Beschleunigung und Umlenkung sollten zeitlich zusammenfallen. Dies wäre sinngemäß dadurch zu realisieren, daß sich der betreffende Kanal auf einem bestimmten Abschnitt seiner Länge verjüngt und zugleich die Richtung ändert. Ein besonders guter Effekt hat sich dann ergeben, wenn einer kontinuierlichen Querschnittsverjüngung eine oder mehrere Richtungsänderungen überlagert werden.

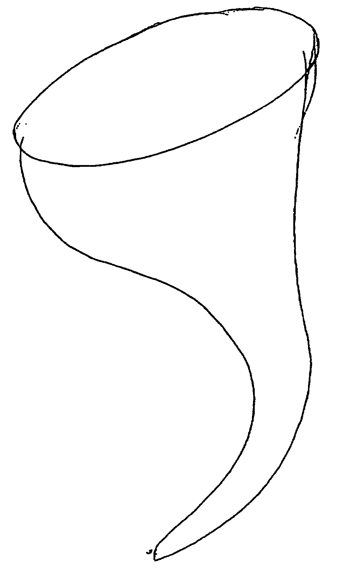

Man könnte sagen, daß die strömungsberührte Fläche der Kanalwand die Gestalt eines Füllhorns hat. Auf die beigefügte Figur wird verwiesen.

## Patentansprüche

1. Verfahren zum Homogenisieren einer Glasschmelze, mit den folgenden Merkmalen:
1.1 man läßt die Glasschmelze durch einen Strömungskanal strömen;
1.2 man beschleunigt die Strömung;
1.3 die Beschleunigung erfolgt auf dem gesamten Strömungsweg mittels einer von Sprungstellen freien Querschnittsverringerung des Kanals in stetiger Weise;
1.4 die Strömung ist auf dem gesamten Strömungsweg frei von Wegstrecken konstanter Geschwindigkeit oder von Verzögerungen;
1.5 die Strömung wird wenigstens auf einem Teil des Strömungsweges wenigstens einmal umgelenkt;
1.6 die Umlenkung erfolgt kontinuierlich entlang gekrümmter Linien.

2. Verfahren nach Anspruch 1, **dadurch gekennzeichnet, daß** Umlenkungen in verschiedenen Ebenen erfolgen.

3. Verfahren nach einem der Ansprüche 1 oder 2, **dadurch gekennzeichnet, daß** die Umlenkung größer oder gleich 60 Grad ist.

4. Verfahren nach einem der Ansprüche 1 oder 2, **dadurch gekennzeichnet, daß** die Umlenkung kleiner als oder höchstens gleich 120 Grad ist.

5. Verfahren nach einem der Ansprüche 1 oder 2, **dadurch gekennzeichnet, daß** die Umlenkung etwa 90 Grad beträgt.

6. Speiservorrichtung zum Homogenisieren einer Glasschmelze;
6.1 mit einer Leitung, die einen Strömungskanal bildet;
6.2 der Strömungskanal verjüngt sich auf seiner gesamten Länge;
6.3 der Strömungskanal ist frei von Abschnitten konstanten Querschnitts sowie frei von Abschnitten sich erweitemden Querschnitts;
6.4 der Strömungskanal weist wenigstens eine Umlenkung auf;
6.5 die Umlenkung ist eine kontinuierliche und verläuft entlang einer gekrümmten Linie.

7. Vorrichtung nach Anspruch 6, **dadurch gekennzeichnet, daß** der Strömungskanal in verschiedenen Ebenen umgelenkt ist.

8. Vorrichtung nach Anspruch 6 oder 7, **dadurch gekennzeichnet, daß** die Umlenkung 60 Grad oder mehr beträgt.

9. Vorrichtung nach Anspruch 6 oder 7, **dadurch gekennzeichnet, daß** die Umlenkung 120 Grad oder weniger beträgt.

10. Vorrichtung nach Anspruch 6 oder 7, **dadurch gekennzeichnet, daß** die Umlenkung 90 Grad beträgt.

11. Vorrichtung nach einem der Ansprüche 6 bis 10, **dadurch gekennzeichnet, daß** die Umlenkung auf einem Kreisbogen erfolgt.

12. Vorrichtung nach einem der Ansprüche 6 bis 11, **dadurch gekennzeichnet, daß** die Leitung wenigstens über Teile ihrer Länge als offene Rinne ausgebildet ist.

## Claims

1. A method for homogenizing a glass melt, comprising the following features:
1.1 the glass melt is allowed to flow through a flow channel;
1.2 the flow is accelerated;
1.3 the acceleration occurs on the entire flow path by means of a continuous cross-sectional reduction of the channel which is free from any irregularities;
1.4 the flow is free from path sections of constant speed or delays over the entire flow path;
1.5 the flow is deflected at least once over at least a part of the flow path;
1.6 the deflection occurs continuously along curved lines.

2. A method as claimed in claim 1, **characterized in that** deflections occur in different planes.

3. A method as claimed in one of the claims 1 or 2, **characterized in that** the deflection is larger than or equal to 60 degrees.

4. A method as claimed in one of the claims 1 or 2, **characterized in that** the deflection is smaller than or at most equal to 120 degrees.

5. A method as claimed in one of the claims 1 or 2, **characterized in that** the deflection is approximately 90 degrees.

6. A feeding apparatus for homogenizing a glass melt;
6.1 with a conduit forming the flow channel;
6.2 with the flow channel tapering over its entire length;
6.3 with the flow channel being free from any sections of constant cross section and free from sections of expanding cross sections;
6.4 with the flow channel comprising at least one deflection;
6.5 with the deflection being a continuous one and extending along a curved line.

7. An apparatus as claimed in claim 6, **characterized in that** the flow channel is deflected in different planes.

8. An apparatus as claimed in claim 6 or 7, **characterized in that** the deflection is 60 degrees or more.

9. An apparatus as claimed in claim 6 or 7, **characterized in that** the deflection is 120 degrees or less.

10. An apparatus as claimed in claim 6 or 7, **characterized in that** the deflection is 90 degrees.

11. An apparatus as claimed in one of the claims 6 to 10, **characterized in that** the deflection occurs on an arc of a circle.

12. An apparatus as claimed in one of the claims 6 to 11, **characterized in that** the conduit is arranged at least over parts of its length as an open groove.

## Revendications

1. Procédé pour l'homogénéisation d'une masse de verre en fusion, présentant les caractéristiques suivantes :
1.1 on amène la masse de verre en fusion par un canal d'écoulement ;
1.2 on accélère l'écoulement ;
1.3 l'accélération est réalisée sur tout le trajet d'écoulement au moyen d'une réduction sans gradins de la section du canal, de manière continue ;
1.4 l'écoulement ne présente pas de tronçons de trajet à vitesse constante ni de ralentissements sur tout le trajet d'écoulement ;
1.5 l'écoulement est dévié au moins une fois vers une partie du trajet d'écoulement ;
1.6 la déviation est réalisée en continu le long de lignes courbes.

2. Procédé selon la revendication 1, **caractérisé en ce que** les déviations sont réalisées dans différents plans.

3. Procédé selon l'une quelconque des revendications 1 ou 2, **caractérisé en ce que** la déviation est égale ou supérieure à 60°.

4. Procédé selon l'une quelconque des revendications 1 ou 2, **caractérisé en ce que** la déviation est inférieure ou au maximum égale à 120°.

5. Procédé selon l'une quelconque des revendications 1 ou 2, **caractérisé en ce que** la déviation est de l'ordre de 90° environ.

6. Dispositif d'alimentation pour l'homogénéisation d'une masse de verre en fusion,
6.1 avec un conduit formant un canal d'écoulement ;
6.2 le canal d'écoulement se rétrécit sur toute sa longueur ;
6.3 le canal d'écoulement ne comporte pas de segments de section constante ni de segments de section élargie ;
6.4 le canal d'écoulement présente au moins une déviation ;
6.5 la déviation est continue et suit une ligne courbe.

7. Dispositif selon la revendication 6, **caractérisé en ce que** le canal d'écoulement est dévié dans différents plans.

8. Dispositif selon la revendication 6 ou 7, **caractérisé en ce que** la déviation est égale ou supérieure à 60°.

9. Dispositif selon la revendication 6 ou 7, **caractérisé en ce que** la déviation est inférieure ou égale à 120°.

10. Dispositif selon la revendication 6 ou 7, **caractérisé en ce que** la déviation représente 90°.

11. Dispositif selon l'une quelconque des revendications 6 à 10, **caractérisé en ce que** la déviation suit un arc de cercle.

12. Dispositif selon l'une quelconque des revendications 6 à 11, **caractérisé en ce que** le conduit est conformé au moins dans certaines parties de sa longueur comme une rigole ouverte.
